# EUROPEAN PATENT APPLICATION

(11) **EP 2 821 926 A1**
(43) Date of publication of application: **07.01.2015**
(21) Application number: 13305959.2
(22) Date of filing: 05.07.2013
(51) Int. Cl.: G06F 17/30

(54) **Method for managing data related to a user**

(71) Applicant: Gemalto SA, 92190 Meudon (FR)
(72) Inventor: Faure, Frédéric, 13705 La Ciotat (FR)

(57) **Abstract**

The invention is a method for managing data related to a user which comprises the steps of:
- recording by a sensor a raw data related to an event experienced by the user, the raw data being recorded using a video, picture or audio format,
- storing the raw data into a storing device, secured by access rights attached to the user,
- generating an interpreted data from the raw data using a plurality of analyzing patterns then associating the interpreted data with the raw data, the interpreted data being parameters reflecting the emotion of a person present at the event or reflecting the physical environment of the event,
- receiving in the storing device a request for access to a part of the raw data complying with a criterion,
- checking whether the request is authorized by the user and in case of successful checking, identifying the part of the raw data by applying the criterion to the interpreted data and sending this part to a rendering entity.

## Description

### (Field of the invention)

The present invention relates to methods for managing data related to a user. It relates particularly to methods for managing data related to events experienced by a user.

### (Background of the invention)

People are living a lot of things in their life, but the memory cannot recall everything. People are keeping some physical recalls of their whole life in the form of physical objects from the past or digital personal data such as voice record, photos or videos. All these digital data are usually stored on personal computer or hard disk and are rarely seen.

Digital picture frames or multimedia boxes propose to display some items selected by people themselves. The selected items are rarely changed and many digital data remain unused.

There is a need for proposing a solution allowing to manage digital data reflecting user's life into a digital form, so that this digital data is searchable and usable while preserving privacy.

### (Summary of the Invention)

An object of the invention is to solve the above mentioned technical problem.

The object of the present invention is a method for managing data related to a user. The method comprising the following steps:
- a sensor records a raw data which is related to an event experienced by the user. The raw data is recorded using a video, picture or audio format.
- storing the raw data into a storing device, secured by access rights attached to the user,
- analyzing the raw data, automatically generating an interpreted data from the raw data using a plurality of analyzing patterns and associating the interpreted data with the raw data. The interpreted data is a parameter reflecting the emotion of a person present at the event or reflecting the physical environment of the event.
- receiving in the storing device a request for access to a part of the raw data complying with a criterion,
- checking whether the request is authorized by the user by checking said access rights versus credentials associated with the request,
- in case of successful checking, identifying the part of the raw data by applying the criterion to the interpreted data, and sending the part of the raw data to a rendering entity associated with the request.

Advantageously, the parameter reflecting the emotion of a person may be one of the group containing: words which have been said, facial emotion, smile, tear, type of voice, heartbeat or gesture.

Advantageously, the parameter reflecting the physical environment may be one of the group containing: weather conditions, place, season, sound level, surrounding sound, temperature, type of brightness, appearance of said person, or behavior of said person and measure of a physical quantity.

Advantageously, another sensor may record a meta data associated with the raw data and the step of identifying the part of the raw data may be carried out by applying the criterion to both the interpreted data and the meta data.

Advantageously, the meta data may be one of the group containing: date or measurement of a physical quantity through the other sensor.

Advantageously, the method may comprise the step of updating said analyzing patterns and the interpreted data may be regenerated from the raw data using the updated analyzing patterns.

Advantageously, the analyzing patterns may be are updated based on said criterion.

Another object of the invention is a system comprising a recording device, a storing device and a rendering entity. The recording device comprises a sensor able to record a raw data related to an event experienced by a user. The recording device is able to record the raw data in a video, picture or audio format. The storing device is able to store the raw data with secure access rights attached to the user. The storing device comprises an analyzing pattern and a transformer means configured to use the analyzing pattern to analyze the raw data and to generate a corresponding interpreted data from the raw data. The interpreted data is a parameter reflecting the emotion of a person present at the event or reflecting the physical environment of the event. The storing device is configured to receive a request for access to a part of the raw data which complies with a criterion. The storing device comprises a checking means configured to check whether the request is authorized. The storing device comprises a searching means configured to retrieve a part of the raw data associated to interpreted data which matches with the criterion. The storing device comprises an exporting means configured to send the part to the rendering entity.

Advantageously, the parameter reflecting the emotion of a person may be one of the group containing: words which have been said, facial emotion, smile, tear, type of voice, heartbeat or gesture.

Advantageously, the parameter reflecting the physical environment may be one of the group containing: weather conditions, place, season, sound level, surrounding sound, temperature, type of brightness, appearance of said person, or behavior of said person and measure of a physical quantity.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising four devices able to manage data related to a user according to an aspect of the invention;
- Figure 2 depicts schematically another example of a system comprising three devices able to manage data related to a user according to an aspect of the invention; and
- Figure 3 is an example of a flowchart for the phase of storing and retrieving digital data related to a user according to another aspect of the invention.

### (Detailed description of the preferred embodiments)

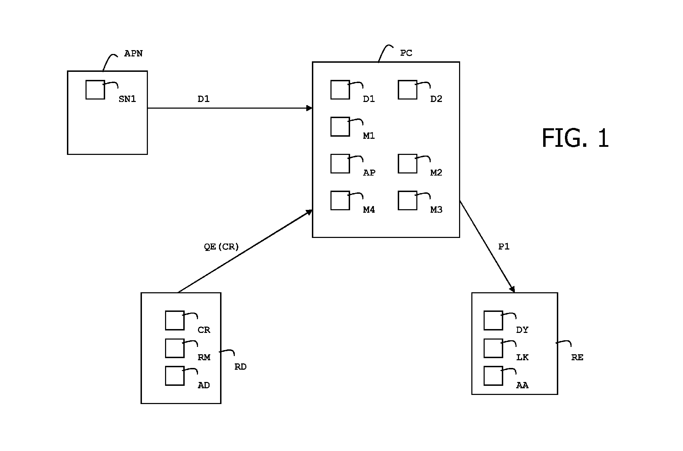

**Figure 1** shows schematically an example of a system comprising four devices APN, PC, RD and RE which are able to manage data related to a user according to an aspect of the invention.

In this example, the device APN is a portable device able to record data related to events experienced by a user. The device APN comprises a sensor SN1 able to record raw data in the form of video, picture or audio format. Raw data means that the data is recorded as data captured by the sensor. For instance, the sensor SN1 is configured to record video. For example, the video format may be interlaced or progressive in RVB, Y/Q, YdbDr or YUV color space and stored into compressed or uncompressed mode, even stereoscopic mode. The recording device APN may be a mobile phone, a camera or any computer having a sensor. The device APN may be a wearable object or a fixed machine.

In the example of Figure 1, the storing device PC is a Personal computer comprising a non volatile memory able to store raw data D1 received from the device APN and the further data generated from the raw data. The device PC comprises a transformer means M1 which is able to use an analyzing pattern AP to analyze the raw data D1 and to generate a corresponding interpreted data D2. The transformer means M1 stores the interpreted data D2 as being associated with the raw data D1 in the memory of the device PC. Thanks to the analyzing pattern AP, the transformer means M1 is able to generate the interpreted data D2 which is either a parameter reflecting the emotion of a person present at the event or a parameter reflecting the physical environment of the event.

The analyzing pattern AP may belong to a first set dedicated to track emotion of a person present at the recorded event. The tracked person may be the user himself or another person like a friend.

For example, the analyzing pattern AP may be a template allowing to recognize the shape of a smile on a face. Thus the transformer means M1 is able to detect if a person is happy by checking the raw data D1 (e.g. by checking the series of pictures of the recorded video).

The analyzing pattern AP may be a preset reference chart allowing to distinguish the tone of a voice. Such analysis shows whether the recorded speaker is sad, happy or excited.

The analyzing pattern AP may also be a list of words and the associated emotions. For instance, the list may comprise the following items:

| | |
|---|---|
| Recognized word | => Associated emotion |
| Holiday | => happiness |
| Funeral | => sadness |
| Wedding | => happiness |
| Ugh! | => loathing/disgust |
| What! | => surprise |
| Pooh! | => contempt |

Thus recognizing words which have been said (e.g.
words or phrases that were spoken) in the video, it is possible to identify the corresponding emotion.

The analyzing pattern AP may also be a list of reference gestures and the associated emotions. For instance, the list may comprise the following items:
- Big and rapid gestures: irritation
- Rapid gesture: stress
- One finger under the eye: tears
- Hand on the forehead: headache

The analyzing pattern AP may also be a template allowing recognizing tears on a face combined to a list of words or gestures to distinguish between sadness and joy.

The analyzing pattern AP may also be a predefined chart containing a plurality of heartbeat values associated to a type of emotion. These heartbeat values can be declined for different ages. These heartbeat values can be combined with any other parameters such as frequency of gesture or the type of voice. Thus a measured heart rate with a high value is a sign of fear, especially when the measured frequency of gesture is low.

The transformer means M1 may be configured to compute the heartbeat by measuring the frequency of variation in brightness of the skin of a person.

The analyzing pattern AP may also be a set of facial expressions allowing recognizing surprise, anger, happiness or sadness for example. For instance, recognition of facial expression may rely on the form of the eyebrows and/or the mouth.

The analyzing pattern AP may focus on the sound of laughter. Optionally, the transformer means M1 may recognize who is laughing.

Using one or several analyzing patterns belonging to said first set, the transformer means M1 may generate interpreted data D2 that reflects the emotion of a person present at the recorded event.

The analyzing pattern AP may belong to a second set dedicated to track the physical environment wherein the event has been recorded.

The analyzing pattern AP may be a set of items to be found in the pictures for detecting the weather conditions at the time the raw data was recorded. For example, these items may be a cloud, a blue sky, snow, rain or fog.

The analyzing pattern AP may also be the presence of the sun or the moon in the pictures.

The analyzing pattern AP may also be a set of items related to the place where the video has been recorded. For instance, the type of lighting (or the brightness) indicates whether a video was recorded outside or inside. The analyzing pattern AP may focus on the presence of furniture, vegetation, sand or building allows knowing whether the shooting was done respectively in a house, outside, on a beach or in a city.

The analyzing pattern AP may focus on the sound level, or the surrounding sound of the video. A high measured surrounding sound may correspond to a festive atmosphere or a nightclub for instance.

The analyzing pattern AP may focus on the type of clothes, the state of the vegetation (including the presence of green leaves) for deducing the season and the temperature level.

The analyzing pattern AP may focus on the appearance (i.e. the look) of the people in the video. For instance, the kind of wears, the type of haircut, the corporal aspect, the physical particularity be used for identifying the season or the period (ex: in the eighties) in which a video was shot.

The analyzing pattern AP may focus on the behavior of the people in the video. For instance, the language or language accent provides a sign of the country or the region in which the video was made. In another example, the measure of a physical quantity like acceleration/motion of a person may be used. It is possible to deduce the following situations: a person is drunk, is running, is on a boat or is on an escalator for instance.

Using one or several analyzing patterns belonging to said second set, the transformer means M1 may generate interpreted data D2 that reflects the physical environment of the recorded event.

Advantageously, the transformer means M1 can use a plurality of analyzing patterns when generating the interpreted data D2.

In the example of Figure 1, the requesting device RD may be a tablet computer. The requesting device RD comprises a criterion CR. The criterion CR aims at selecting a subset of the raw data D1 stored in the device PC. The criterion CR is intended to be used with the interpreted data D2 for identifying the subset of the raw data D1. The requesting device RD may comprise a user interface allowing to enter or to select the criterion CR. The requesting device RD comprises a requesting means RM configured to send a request QE to the device PC. The request QE comprises the criterion CR. The requesting device RD may comprise an authentication data AD allowing to get access to the raw data hosted in the device PC. The request QE may comprise the identifier of the rendering device RE so that the result of the request QE is sent to the rendering device RE by the device PC. The criterion may be the combination of a "person who is laughing" and "on the beach".

In the example of Figure 1, the storing device PC comprises a checking means M2 able to check whether the request QE is authorized. The security checking aims at verifying that the requesting device RD has the authentication data AD which is the credential allowing to access the raw data stored in the device PC, to execute the rendering on the rendering device RE and to apply the criterion CR on the interpreted data D2. The security mechanism may be a login/password, a certificate or the establishment of a secured session for example.

In the example of Figure 1, the storing device PC comprises a searching means M3 able to retrieve the part P1 of the raw data associated to interpreted data which matches with the received criterion CR. For instance, the part P1 may comprise a plurality of video/audio sequences and a couple of photos.

In the example of Figure 1, the storing device PC comprises an exporting means M4 able to send the part P1 to the target specified by the request QE sent by the requesting device RD. For instance, the exporting means M4 may send the part P1 to the rendering device RE.

In another example, the target may be the requesting device RD itself.

The target may be either implicitly or explicitly provided by the request QE.

In the example of Figure 1, the rendering device RE is a Digital picture frame having a display DY and/or a loudspeaker LK. The rendering device RE comprises a manager agent AA able to receive the part P1 from the storing device PC and to handle the display order of video sequence and photos comprised in the received part P1.

If raw data were stored in an encrypted form, there is a sub-step of deciphering the part P1 before sending.

The rendering device RE may be any device able to play the raw data, like a TV or a personal computer for example.

For instance, the request QE may be sent using any LAN or WAN protocol such as Bluetooth, Wi-Fi, Zigbee, or PLC. For raw data transmission, any streaming such as airplay, UPnP, Wi-Fi or Miracast may be used. Raw data can also be fully sent to rendering device RE before rendering using a relevant protocol.

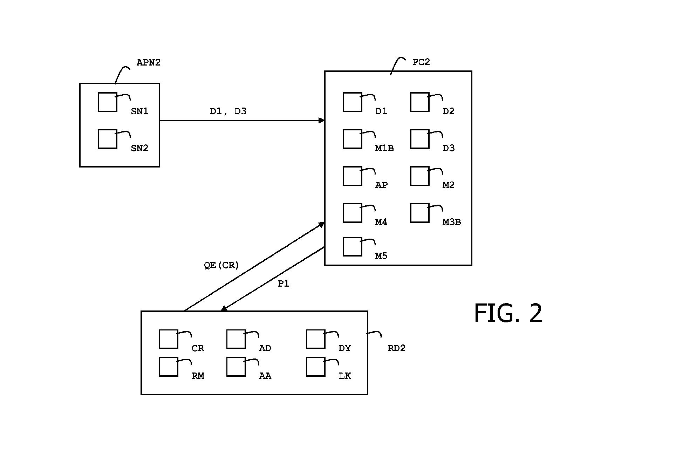

Figure 2 shows schematically an example of a system comprising three devices APN2, PC2 and RD2 which are able to manage data related to a user according to an aspect of the invention.

The recording device APN2 is similar to the recording device APN of Figure 1 and comprises in addition a second sensor SN2.

The second sensor SN2 is able to a record a meta data D3 which is associated to the raw data. For example, the meta data D3 may be the date or a measurement of a physical quantity such as GPS (Global Positioning System) coordinates, orientation, speed, atmospheric pressure, blood pressure or blood heat. Advantageously, the sensor SN2 may be coupled with a GPS chip which provides the GPS coordinates, the orientation or the speed. A meta data is a set of data attached to a recorded raw data. For instance, a raw data may be a sequence of video associated with meta data comprising the measured atmospheric pressure and the measured speed at the time of the raw data recording.

Alternatively, the second sensor SN2 is embedded in another device (not shown on drawings) and the recording device APN2 is able to retrieve the value measured by the second sensor SN2 and to associate it with the raw data.

The storing device PC2 is similar to the storing device PC of Figure 1 and comprises in addition an optimizer means M5 able to update the analyzing patterns AP. For example, the optimizer means M5 may modify the content of the analyzing patterns AP based on the criterion CR received from the requesting device RD2. For instance, the criterion CR may be selected for updating the analyzing pattern if the criterion CR is frequently used by the requesting device RD2. In another example, the optimizer means M5 may modify the analyzing patterns AP (or its content) using input provided by the user, through a firmware upgrade, or based on other analyzing patterns coming from another device.

The storing device PC2 comprises a transformer means M1B which is similar to transformer means M1 of Figure 1 and is able in addition to use the updated analyzing pattern AP to re-generate interpreted data D2 corresponding to the raw data D1. Thus the interpreted data D2 may be dynamically updated while the raw data D1 remains unchanged.

The requesting device RD2 is a device corresponding to the merger of the requesting device RD and the rendering device RE of Figure 1. In other words, the requesting device RD2 is able to send a request QE for getting a part P1 of raw data corresponding to a criterion CR and the requesting device RD2 is capable of using the received part P1. For instance, the requesting device RD2 is able to display a video file or play an audio file.

The storing device PC2 comprises a searching means M3B which is similar to searching means M3 of Figure 1 and is able in addition to apply the criterion CR to both the interpreted data D2 and the meta data D3 for retrieving the targeted part P1 of the raw data D1. For instance, the meta data D3 may comprise the date and the GPS coordinates. The criterion may be the combination of a three conditions "person who is laughing" and "at home" and "during summer 2013". In this case the two conditions "person who is laughing" and "at home" are used with the interpreted data D2 while the third condition is used with the meta data D3 for selecting the requested part of the raw data.

The raw data is securely stored in the storing device. Advantageously, access to the interpreted data and to the meta data is protected by the same credentials.

Advantageously, the storing device may contain an enrollment means (not shown on drawings) able to check that a rendering device is authorized to get the raw data. Once the rendering device is enrolled, the storing device may send a part of the raw data in streaming mode according to preset criteria or in a random way. The enrollment allows to securely pair the storing device with the rendering device.

Optionally, the analyzing pattern AP may allow recognizing a person thanks to his/her voice or through facial recognition mechanism. Thus the interpreted data D2 may also contain the name of a recognized person present in a video for example. Such additional items may be associated to the interpreted data D2 in automatic mode or via user interactions as described below.

Optionally, the storing device may comprise a local machine and a remote machine linked through a network. For instance, the local machine may be a Personal computer while the remote machine is a distant server in the cloud reachable through the Internet.

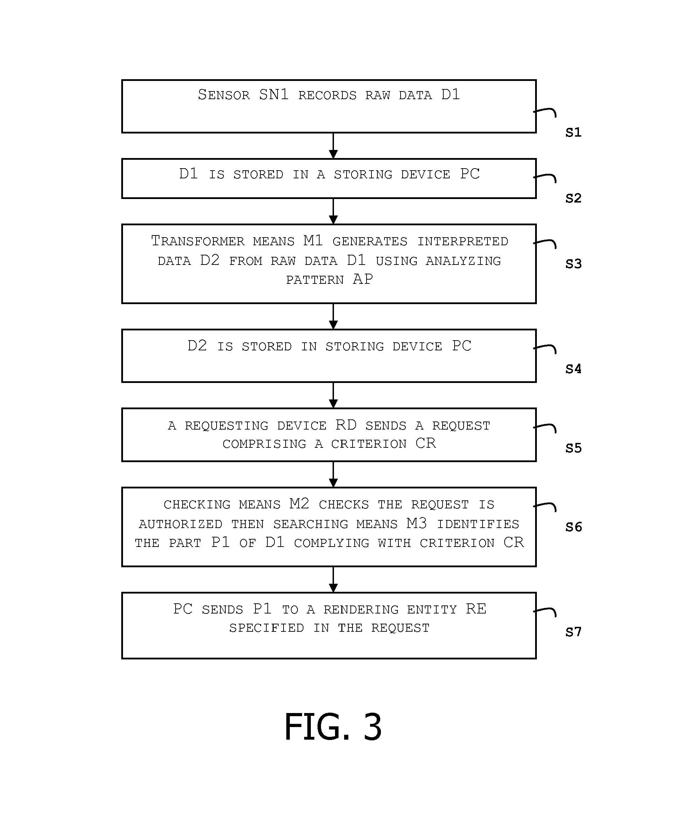

**Figure 3** shows an example of a flowchart for a phase of storing and retrieving raw data related to a user according to another aspect of the invention.

First, the sensor SN1 records a raw data D1 at step S1. For instance, the sensor SN1 takes ten photos.

At step S2, the raw data is transferred from the recording device to the storing device PC which stores the 10 photos in a secure area. Advantageously, the recording device may have security features which encipher the raw data D1 before the transfer to the storing device PC. The transfer may be performed either via a wired connection like USB or an Ethernet port or via a contactless connection like Bluetooth ®, Wi-Fi ®, or any other relevant wireless protocols.

In another example, the recording device and the storing device may be merged in a single device.

At step S3, the transformer means analyzes the received raw data D1 using the analyzing pattern AP and generates an interpreted data D2 associated to raw data D1. For instance, the interpreted data D2 may comprise the keyword "winter" for the Photo #1, the keywords "winter" and "snow" for the Photo #2, the keywords "snowman" and "snow" for the photos #3 and #4, and so on. Advantageously, the generation of the interpreted data D2 is automatically conducted by the transformer means M1. This generation may be automatically triggered by the receipt of the raw data.

Alternatively, the user may be prompted to provide additional details for improving the current analyzing pattern. Thus the transformer means may ask the user additional information to complete the analyzing pattern. This information can be manually entered by the user. For instance, the first time a car is met in the raw data, the user may be prompted to specify the owner or the model of the car.

The interpreted data D2 is stored into a non volatile memory of the storing device at step S4. For instance, the raw data D1 and the associated interpreted data D2 may be stored in a database hosted by the storing device.

At step S5, the user provides a requesting device with a criterion CR. For instance, the user wants to access the raw data concerning the snowman theme. (e.g. CR= snowman). The requesting device sends a request comprising the criterion CR to the storing device. Advantageously, the user has previously authenticated by a login/password mechanism for example. Thus the request is sent using credentials specific to the user. In another example, the requesting device and the storing device may be merged in a single device.

At step S6, the checking means of the storing device verifies that the request is authorized to access the raw data D1. In case of success, the searching means selects the subset of interpreted data D2 which complies with the criterion CR and then gets the corresponding part P1 of the raw data D1. In our example, the part P1 comprises the photos #3 and #4.

At step S7, the storing device sends the photos #3 and #4 to a rendering entity which may be the initial requesting device or another device, like a PC, a tablet computer, a digital framework or any relevant device.

The raw data is recorded by a single sensor SN1. Note that in the case of 3D video, the sensor SN1 may comprise two basic video cameras.

Advantageously, a plurality of raw can be transferred to the storing device on one or more time and in one or more formats.

Advantageously, the recording device may a wearable device permanently (at least when the user is awake) recording sound and video. Thus the user may get a track of all events he experienced. Such memorized events are then stored for a long time and can supplement the brain's natural memory. This additional memory may be useful for person suffering from memory impairment like old people or people suffering from Alzheimer's disease.

Thanks to the invention, an adult may have access to all his/her life even for period which he/she was unable to preserve memories (e.g. the baby period)

Advantageously, the raw data and the associated interpreted data can be bequeathed to a descendant or a third party through a formal notarized.

## Claims

1. A **method** for managing data related to a user, said method comprising the steps:
- a sensor (SN1) records a raw data (D1) related to an event experienced by the user, said raw data (D1) being recorded using a video, picture or audio format,
- storing the raw data (D1) into a storing device (PC), secured by access rights attached to the user, **characterized in that** the method comprises the following steps:
- analyzing the raw data (D1), automatically generating an interpreted data (D2) from said raw data (D1) using a plurality of analyzing patterns (AP) and associating said interpreted data (D2) with the raw data (D1), said interpreted data (D2) being a parameter reflecting the emotion of a person present at the event or reflecting the physical environment of the event,
- receiving in the storing device (PC) a request for access to a part of the raw data (D1) complying with a criterion,
- checking whether the request is authorized by said user by checking said access rights versus credentials associated with the request,
- in case of successful checking, identifying the part of the raw data (D1) by applying the criterion to said interpreted data (D2), then sending the part of the raw data (D1) to a rendering entity (RE) associated with the request.

2. A method according to claim 1, wherein said parameter reflecting the emotion of a person is one of the group containing: words which have been said, facial emotion, smile, tear, type of voice, heartbeat or gesture.

3. A method according to claim 1, wherein said parameter reflecting the physical environment is one of the group containing: weather conditions, place, season, sound level, surrounding sound, temperature, type of brightness, appearance of said person, or behavior of said person and measure of a physical quantity.

4. A method according to claim 1, wherein another sensor (SN2) records a meta data (D3) associated with said raw data (D1) and wherein the step of identifying the part of the raw data (D1) is carried out by applying the criterion to both the interpreted data (D2) and the meta data (D3).

5. A method according to claim 4, wherein the meta data (D3) is one of the group containing: date or measurement of a physical quantity through the other sensor (SN2).

6. A method according to claim 1, wherein the method comprises the step of updating said analyzing patterns (AP) and wherein the interpreted data (D2) is regenerated from the raw data (D1) using said updated analyzing patterns.

7. A method according to claim 6, wherein said analyzing patterns (AP) are updated based on said criterion.

8. A system comprising a recording device (APN), a storing device (PC) and a rendering entity (RE), said recording device (APN) comprising a sensor (SN1) able to record a raw data (D1) related to an event experienced by a user, said recording device (APN) being able to record the raw data (D1) in a video, picture or audio format, said storing device (PC) being able to store the raw data (D1) with secure access rights attached to the user,
**characterized in that** the storing device (PC) comprises an analyzing pattern (AP) and a transformer means (M1) configured to use the analyzing pattern (AP) to analyze the raw data (D1) and to generate a corresponding interpreted data (D2) from said raw data (D1), said interpreted data (D2) being a parameter reflecting the emotion of a person present at the event or reflecting the physical environment of the event,
**in that** the storing device (PC) is configured to receive a request (QE) for access to a part of the raw data (D1) complying with a criterion (CR), said storing device comprising a checking means (M2) configured to check whether the request (QE) is authorized,
**in that** the storing device (PC) comprises a searching means (M3) configured to retrieve a part (P1) of the raw data (D1) associated to interpreted data (D2) which matches with the criterion (CR),
and **in that** the storing device (PC) comprises an exporting means (M4) configured to send the part (P1) to the rendering entity (RE).

9. A system according to claim 8, wherein the parameter reflecting the emotion of a person is one of the group containing: words which have been said, facial emotion, smile, tear, type of voice, heartbeat or gesture.

10. A system according to claim 8, wherein said parameter reflecting the physical environment is one of the group containing: weather conditions, place, season, sound level, surrounding sound, temperature, type of brightness, appearance of said person, or behavior of said person and measure of a physical quantity.
